# EUROPEAN PATENT SPECIFICATION

(11) **EP 2 251 802 B1**
(45) Date of publication and mention of the grant of the patent: **16.08.2017**
(21) Application number: 10162829.5
(22) Date of filing: 14.05.2010
(51) Int. Cl.: G06F 17/30

(54) **Method and program for generating a subset of data from a database**
Verfahren und Programm zum erzeugen einer Datenuntergruppe einer Datenbank
Procédé et programme d'ordinateur de génération d'un sous-ensemble de données d'une base de données

(30) Priority: 15.05.2009 NL 2002900
(43) Date of publication of application: 17.11.2010
(73) Proprietor: MindBox B.V., 9743 AD Groningen (NL)
(72) Inventor: Kikkers, Harald, 9481 JN, Vries (NL)
(74) Representative: V.O.

(56) References cited:
- US-A- 5 758 337

## Description

### FIELD AND BACKGROUND OF THE INVENTION

The invention relates to a method and a program for generating a subset of data from a database.

For the automated management of large amounts of data, it is usual to make use of a relational database. Most popular commercial and open source databases currently in use are based on the relational model. A relational database is a database with relations according to an underlying data model. The data are stored in a structured manner that may be represented as tables in which rows constitute so-called records constituting instances of an entity and columns which each contain the values of one attribute (e.g. age, colour, mileage) for the respective instances (e.g. cars for sale).

Each record is identified by a primary key. The primary key is an attribute or a set of attributes that uniquely identify a specific instance of an entity. Every entity in the data model must have a primary key whose values uniquely identify instances of the entity. Thus, primary keys enforce entity integrity. Within a table several candidate keys may meet the requirements a primary key must meet.

A primary key must meet the following requirements:
- It must have a value for each instance of an entity
- The value must be unique for each instance of an entity
- The values should remain the same and not become empty as long as the instance of the entity exists in the database
Apart from entity integrity, referential integrity is essential for a reliable referential database. Foreign keys enforce referential integrity by completing an association between two entities. A foreign key defines that a value of an attribute identifies a relationship with an instance of a parent entity having an identical primary or candidate key value. A value of a foreign key in a row of one table refers to a row with associated data in another table. Each relationship in the model must be supported by a foreign key. Thus, a row in the referencing table cannot contain values that do not exist as primary keys or candidate keys in the referenced table. The value or values in one row of the referencing columns must occur in a single row in the referenced table.

Every dependent and category (subtype) entity must have a foreign key for each relationship in which it participates. Foreign keys are formed in dependent and subtype entities by migrating the entire primary key from the parent or generic entity. If the primary key is composite, it may not be split.

Foreign key attributes are not owned by the entities to which they have been migrated, because they constitute values of one or more attributes in the parent entities. Thus, each attribute in an entity is either owned by that entity or belongs to a foreign key in that entity.

The constraints provided by foreign keys enforce that data in a record refer to another record only if that other record does actually exist. For instance, if an order table contains orders each including a reference to a customer in a customer table, then the customer to which reference is made should actually exist for each order in the order table. Also, a customer cannot be removed from the customer table without removing the orders referring to that customer.

The development of applications for inputting and editing data in large and complex relational databases and the development of data model for such databases is difficult to oversee while consequences of errors or malfunctions of such relational database systems may have severe consequences. It is therefore customary to test newly developed or updated applications and data models on a copy of a source database to which the application or data model is to be applied, before full implementation of the new or updated application or data model, for instance to test for hot spots for collisions, data contention, row/page locking, data correctness or application logic.

In many cases, the data in the source data are confidential, for instance for reasons of privacy or as trade secrets. Therefore, it is known to apply transformations to the data before making the data available for testing, which is often carried out outside the organization in which confidentiality measures, such as limited access policies and confidentiality obligations, have been implemented.

It is also known to provide only a sub-set of the original database for testing, for instance to reduce the amount of data that has to be made available for testing. A sub-set of data from a database may also be made available for other purposes, for instance for making available data for a purpose for which only a sub-set of the data is relevant.

U.S. patent application Pub. No. 2005/0198074 discloses a method for creating a replica version of a relational database based upon information obtained from a source database. The system populates the replica database with all or a portion of the data from the source database and transforms the data during the extraction process using a standard set of algorithms. This keeps any proprietary information in the source database from reaching the replica database while still retaining that source database's referential integrity.

At the schema level the user can specify the size of the replica database as: a percentage of the size of the source database or the user can specify the actual physical size of the replica database (e.g. in megabytes...). For schema-level filtering, the driving tables are automatically determined. Driving tables, are those tables in the source database for whom filtering is applied in order to limit the data extracted from these tables and whose selected results drive the selection from the remainder of the tables in the source database based upon the table relationships. Tables representing leaf-level nodes in the table hierarchies, which are those with parent relationships but no child relationships, are designated as the driving tables, with an extract percent value equivalent to the extract percentage set at the schema level. However, depending on the distribution of data in the database, this may result in a non-representative replica of portions of the replica database.

At the table level, the user can specify the percentage of the table to be extracted, the actual number of rows to be extracted or the filter to be applied as part of that table's extract process. In the event table-level filters are defined, the hierarchy will be traversed from top to bottom in order to specify the "WHERE" clause of any tables that exist below a driving table in a given table hierarchy. These tables will inherit the WHERE clause of any related driving table that exists above them in the hierarchy and any joins (FROM/WHERE clauses) generated to support the associated foreign keys. It is then determined which tables have rows that will be selected on an AS-NEEDED basis. Only the tables that have a parental (e.g., parent, grandparent, etc...) relationship to any of the tables touched in the top-down traversal will be selected. The remainder of tables will be filtered so that no rows are selected. This means that tables having a child relationship to the drive tables will not be included in the replica database.

US 5,758,337 describes a system for generating a partial replica of a database.

### SUMMARY OF THE INVENTION

It is an object of the present invention to provide a solution which allows to quickly create a subset of data from a database, which is a more representative sample with respect to characteristics relevant to the test to be carried out, while maintaining referential integrity.

According to the invention, this object is achieved by providing a method according to claim 1. The invention can also be embodied in a computer program product according to claim 8.

Since foreign key relationships are checked for conflicts with established dependencies based on other foreign key relationships, not only foreign key relationships with tables having a parent role in a relationship with the driving table, but also foreign key relationships with tables that have a child role in the relationship with the driving table can be used as dependecies for the selection of records during replication, and the dependecies of tables having a child relationship with the driving table are selected automatically. Thus, applying the invention, a computer system can generate a sub-set of data from a source, including data from tables of which the driving table is a parent while maintaining referential integrity automatically and therefore more quickly, in particular if a table that has a parental relationship with many other tables is selected as the driving table. The method according to the invention also allows to generate sub-sets of a database with different filters applied to the same or different driving tables very quickly, so that it can be determined quickly which approach provides the best sub-set database for the purpose at hand, for instance in terms of statistical representativeness of data of (the relevant portion of) the source data base.

Particular elaborations and embodiments of the invention are set forth in the dependent claims.

Further features, effects and details of the invention appear from the detailed description and the drawings.

### BRIEF DESCRIPTION OF THE DRAWINGS

Fig. 1 is a flow chart representation of an outline of an example of a method according to the invention;
Fig. 2 is a flow chart representation of an example of the determination of preliminary levels of tables in a dependency hierarchy;
Fig. 3 is a flow chart representation of an example of an initial examination of foreign key relationships as a basis for establishing a dependency,
Fig. 4 is a flow chart representation of an example of a subsequent examination of foreign key relationships as a basis for establishing a dependency,
Fig. 5 is a graphic representation of an example of a data model of database, and
Fig. 6 is a graphic representation of an example of a sequence of dependencies to be adhered to when replicating a subset of data from a database with a data model as shown in Fig. 5.

### DETAILED DESCRIPTION

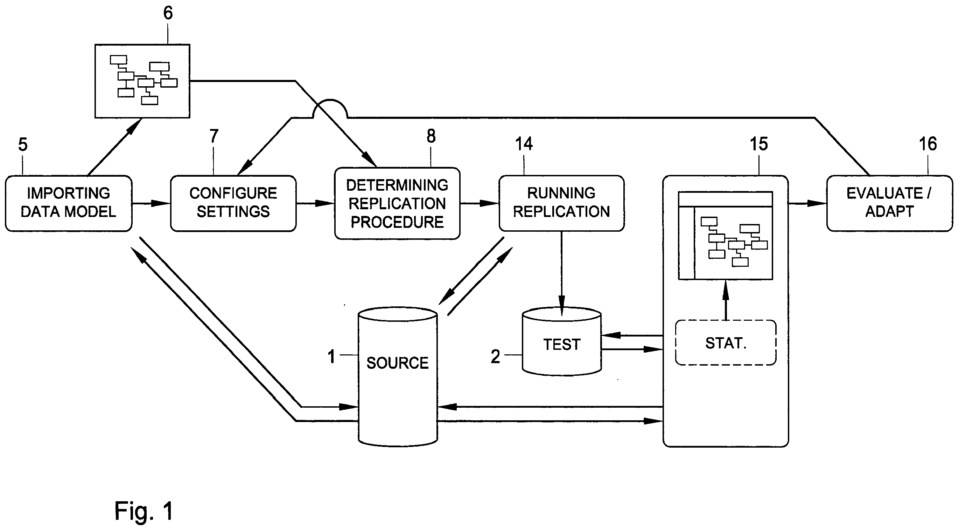

In Fig. 1 an overview of an example of a method according to the invention for automatically creating a sampled replica database 2 from a source relational database 1 is shown.

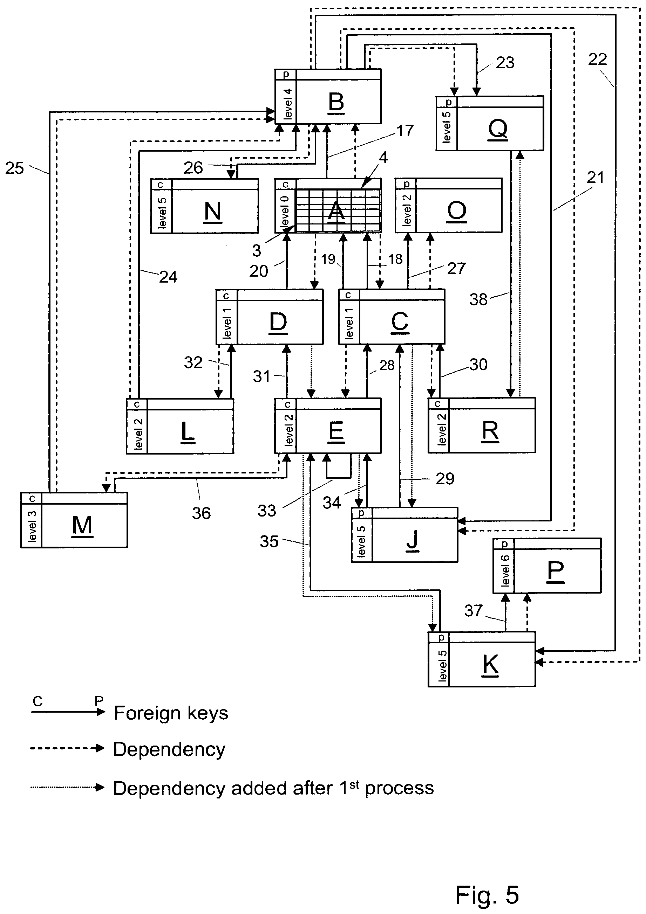

An example of a data model for such a database 1 is shown in Fig. 5. As is shown by way of example for table A only, each table A-E, J-R includes rows 3 constituting records in the form of rows of data, each row of data is associated to an instance of an entity, and columns 4 containing values of an attribute for each of the instances of the entity. For the sake of clarity, only one row 3 and one column is indicated by a reference numeral.

In a first stage 5 of the method, a data processing system running a computer program according to the invention for partially replicating a database imports the data model 6 from the source database 1. The importation of the definition of the data model 6 includes determining which tables are included in the database 1, which foreign key relationship constraints exist between pairs of the tables and whether the tables in the foreign key relationships have parent or child roles.

The user may then select from a presentation by the data processing system of the tables found in a user interface which table is to be used as the driving table in the sense that records from that table are to be selected in accordance with a filtering rule that may for instance be user defined or stored previously. The selection of the records may for instance simply be every third record or be based on data contained in the records to evenly distribute the selection in accordance with predetermined criteria. It is also possible to base the selection on the amount of data contained in the records in order to obtain a representative selection with respect to the amount of data. Furthermore, tables that can be skipped or that have to be included fully can also be selected. Also foreign key relationships that are to be disregarded can be selected. In stage 7, the data processing system reads the commands inputted by the user.

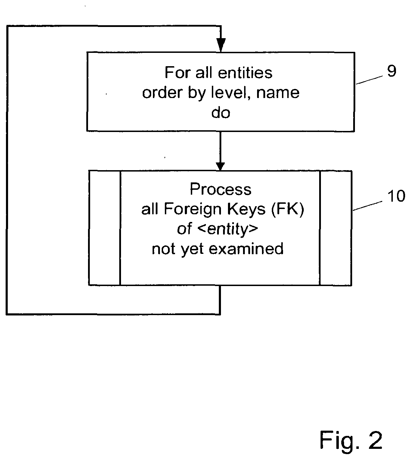

In stage 8, the data processing system determines the procedure for replicating data from the source database 1 into a sub-set database 2. In this example the sub-set database is a test database 2, but the sub-set database may also serve for other purposes. The basic outline of this determination is shown in Fig. 2. In stage 9, all entities (tables) are ordered by preliminary level. The preliminary level of a table is the minimum number of foreign key relationships between the driving table and that table. It is then determined for each foreign key relationship whether it is to be included in the determination of records in the tables associated thereby. More specifically, the determination of the preliminary level includes selecting a group of the tables that are in direct foreign key relationship with the driving table and assigning a first preliminary level to each of the tables of the selected group. After tables have been processed as discussed below, a next group of the remaining tables, each involved in a foreign key relationships with a table of the directly previously selected group of tables is selected and a next preliminary level is assigned to each of the tables of the selected next group. Thus, the tables are processed in an order determined by stepwise increasing preliminary level, the driving table being assigned the lowest level, for instance level zero.

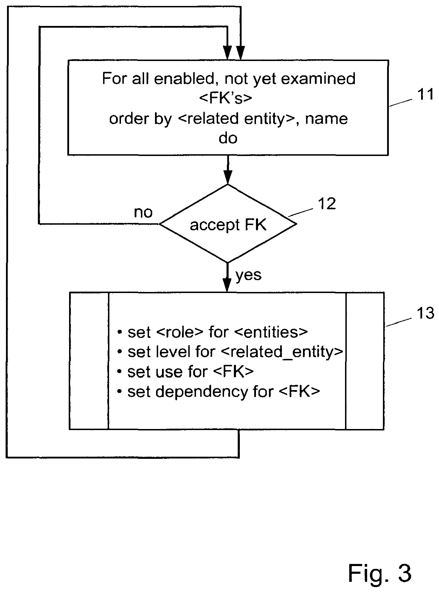

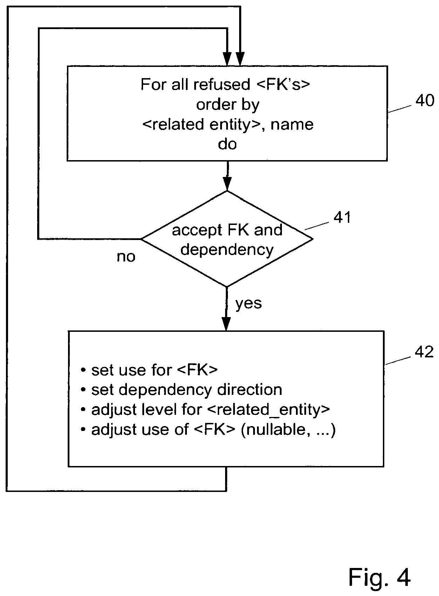

After a preliminary level has been assigned to a group of tables, in stage 10, for each table of that preliminary level, the foreign key relationships are examined for suitability, at the current preliminary level, as a dependency in the selection of data for the partial data replication while ensuring maintenance of referential integrity. This examination stage 10 is shown in more detail in Figs. 3 and 4.

In stage 11, the foreign key relationships of a table are ordered by related table and foreign key name and checked for having been examined. In stage 12, each foreign key relationship in which the table is involved is examined. This examination may for instance include the following steps:
- if the table of which the foreign key relationships are examined is not the driving table, if this table is a parent in another foreign key relationship on the basis of which a dependency has been established, and the role of the related table in the foreign key relationship being examined is the child role, skipping the examined foreign key relationship; and
- if the examined foreign key relationship is not skipped: if (a) the role of the related table in the present foreign key relationship is the parent role or if (b) the role of the related table in the present foreign key relationship is the child role and the related table has no other parent, establishing a dependency based on the foreign key relationship for use in the database replication.

The first step defers inclusion of tables that are a child of a parent in another dependency to a higher level. The second step avoids dependencies of a child table from two parents, since this will require records in the child to be limited to records that contain references to records in both parents only.

Pseudo code for step 12 may for instance read as follows, where start entity is the table of which the foreign key relationships (FK) are examined:
FK accepted:

   ```
             if <start_entity> in FK = Child
                   or ( <start_entity> in FK = Parent
                          and <related_entity> has no parent yet
                          and role of <start_entity> = Child)
                   or <level> of <start_entity> = 0
             and if no cycle (through dependencies)
             and if no hierarchy
             and no change of assigned role for <related_entity>
```

The requirements "no cycle" and "no hierarchy" are included that a foreign key relationship is not accepted as a basis for a dependency if it is included in a cycle or in a hierarchy within a table. If foreign key relationships are refused because of the occurrence of a cycle or a hierarchy, a report for the user of the data processing system is preferably generated, leaving the user the option to reconfigure the replication logic if this appears advisable for the purpose at hand. Furthermore, the final requirement is that a role that has been assigned to a table in an examined foreign key relationship may not be changed for the examination of another foreign key relationship. Thus, assignment of a role to a table in a foreign key relationship effectively means that the direction of dependency between the tables involved is fixed, at least within the given determination of foreign key relationship based dependencies to be used in a replication procedure.

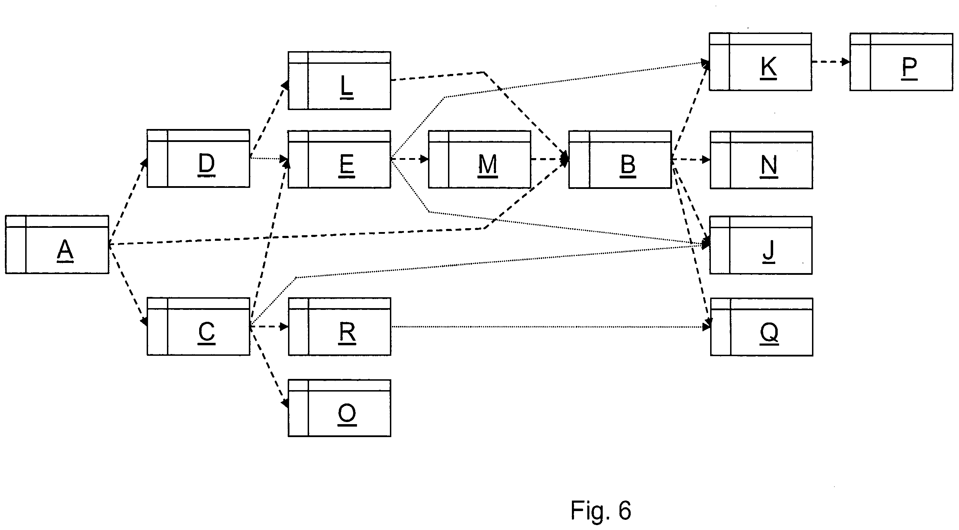

When an examined foreign key relationship has been accepted as a basis for establishing a dependency for use in the replication process, in step 13 it is registered that the foreign key relationship is accepted for use, the roles for the tables to which the foreign key relationship applies are registered so that these roles are fixed and the preliminary level for the related table is set to a value one increment higher than the level value of the table of which the foreign key relationships are examined, so that the foreign key relationships of that table will be examined during examination of foreign key relationships of the tables of the next preliminary level. The value of the preliminary level after the examination process has been completed is the dependency level, which is the level of a table in a hierarchy of levels (see Fig. 6, from left to right each column constitutes a dependency level) from the driving table, which constitutes the order in which foreign keys relationships are applied for the selection of records during replication.

A role change of a dependent table in an established dependency is prevented, because a parent table may contain records to which no foreign key related data in a child table refer. In contrast, a child table may not contain foreign key related data that refer to a record in a parent table that does not exist. Accordingly, if a parent table depends from two or more child tables, the selection query for selecting records from the parent table will prescribe that records are selected to which foreign key related data in *at least one* of these child tables refer. If a child table depends from two or more parent tables, the selection query for selecting records from the child table will prescribe that records are selected that contain foreign key related data that refer to records in *all* of these parent tables. Although the latter requirement guarantees referential integrity, it entails a high risk of a dependent table being filled with very few or no records. Therefore, dependencies with child tables as the dependent table are preferably automatically given less or least preference, to reduce the likelihood or number of dependencies involving multiple dependent child tables.

In Fig. 4, a basic structure of examining initially refused foreign key relationships is shown. In step 40, the remaining foreign key relationships are ordered, in step 41 the foreign key relationships are examined one by one as in step 12 in Fig. 3. Step 42 is similar to step 13 in Fig. 3, except that the dependency direction is also set, because it may have been examined for two opposite directions.

After selection of the foreign key relationships on the basis of which dependencies are established that are to be used in the replication process, the replication procedure 14 (Fig. 1) can be started. During the replication procedure, the data processing system selects the selected records in the driving table and instances of the tables that are directly or indirectly associated with the selected records in the driving table via at least one of the established foreign key dependencies in accordance with values of foreign key attribute instances of the selected records in the driving table. The directions of the established dependencies determine the order in which the tables of the subset of data will be filled. Preferably, all foreign keys except cycles and hierarchies (which mostly occur in end tables) are used. For the selection of instances known query tools such as SQL (structured querying language) can be used. The selected instances from the source database 1 are replicated to the test database 2.

In stage 15, statistics are gathered from both the source database and the test database. From these statistics it can be determined whether the test database 2 constitutes a sufficiently representative sample of the source database 1. If, for instance, tables that are to be involved in testing contain no or very few data, it is generally advisable to generate a different partial replication of the source database. The statistics program may also generate percentages of how many of the original foreign key referrals of a foreign key relationship have been replicated into the sub-set of data. Stage 16 consists of running an application that allows the user to edit the inputted settings and the data model, to correct such undesired deviations.

### EXAMPLE 1

Below an example in which the principles set forth above are applied is specified.

### Definitions:

- <driving_entity>: entity (table) to which a record selection filter is to be applied and from which determination of dependencies to be established begins
- <start_entity>: entity (table) of which foreign key relationships (FKs) are examined
- <related_entity>: entity (table) related to <start entity> via an FK being or having been examined
- <FK>: foreign key relationship (<start_entity> <--> <related_entity> in Entity Relation Model
- <dependency>: relationship that defines that selection of records of a related (dependent) entity during loading depends from selected records in the start entity via the foreign key relationship on which the dependency is based
- <level>: initially, the <level> of an entity is the minimum number of foreign key relationships between the driving table and that entity; ultimately the dependency <level> of an entity is the largest number of sequential dependencies between that entity and the driving entity
- <hierarchy>: the <start_entity> is also the <related_entity>
- <cycle>: dependencies would connect entity to itself via other entities

Algorithm in pseudo code (comments in common language are printed in italics):

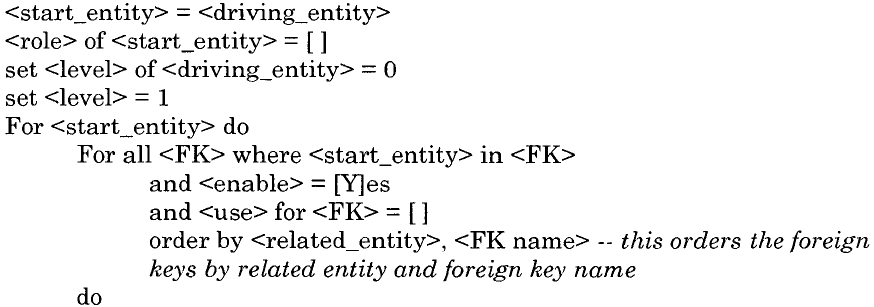

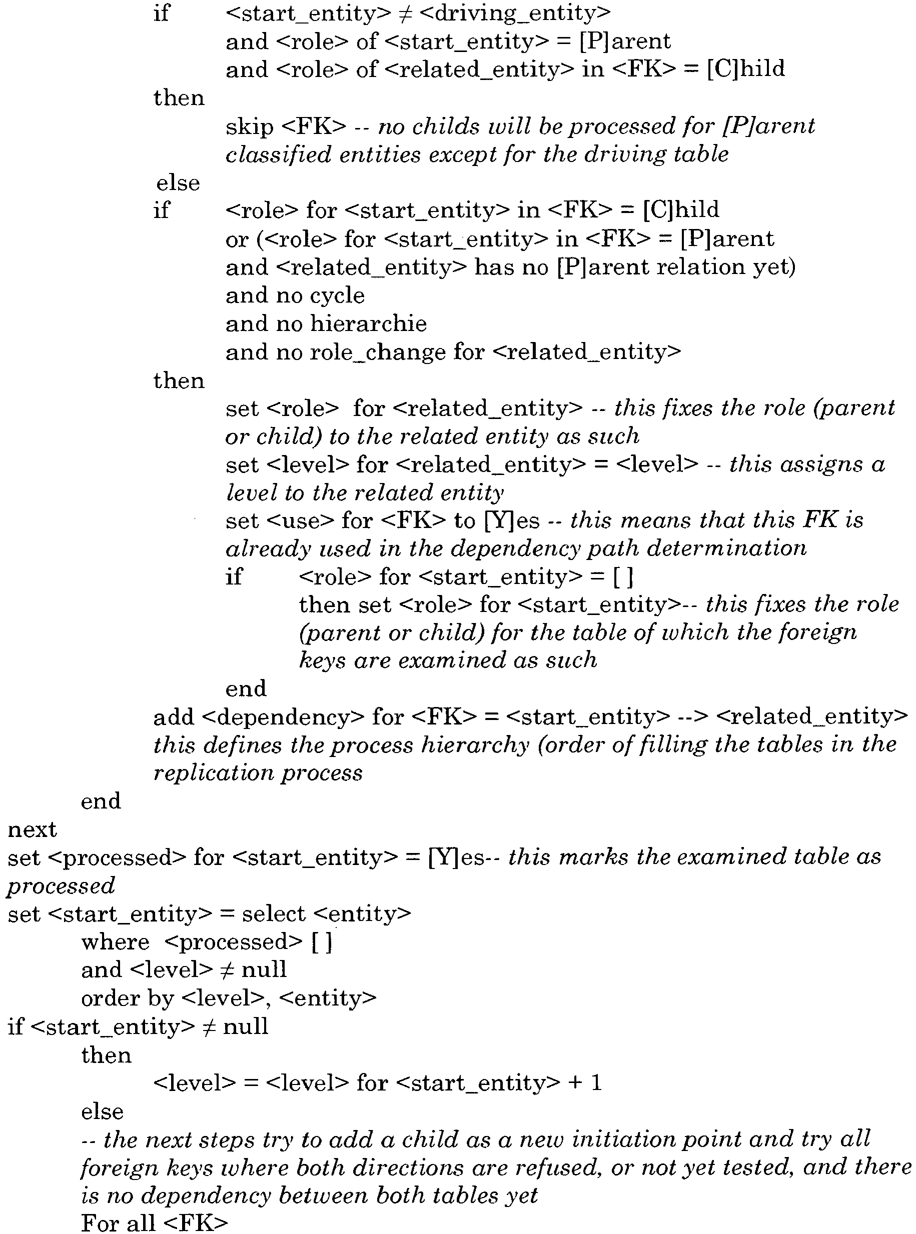

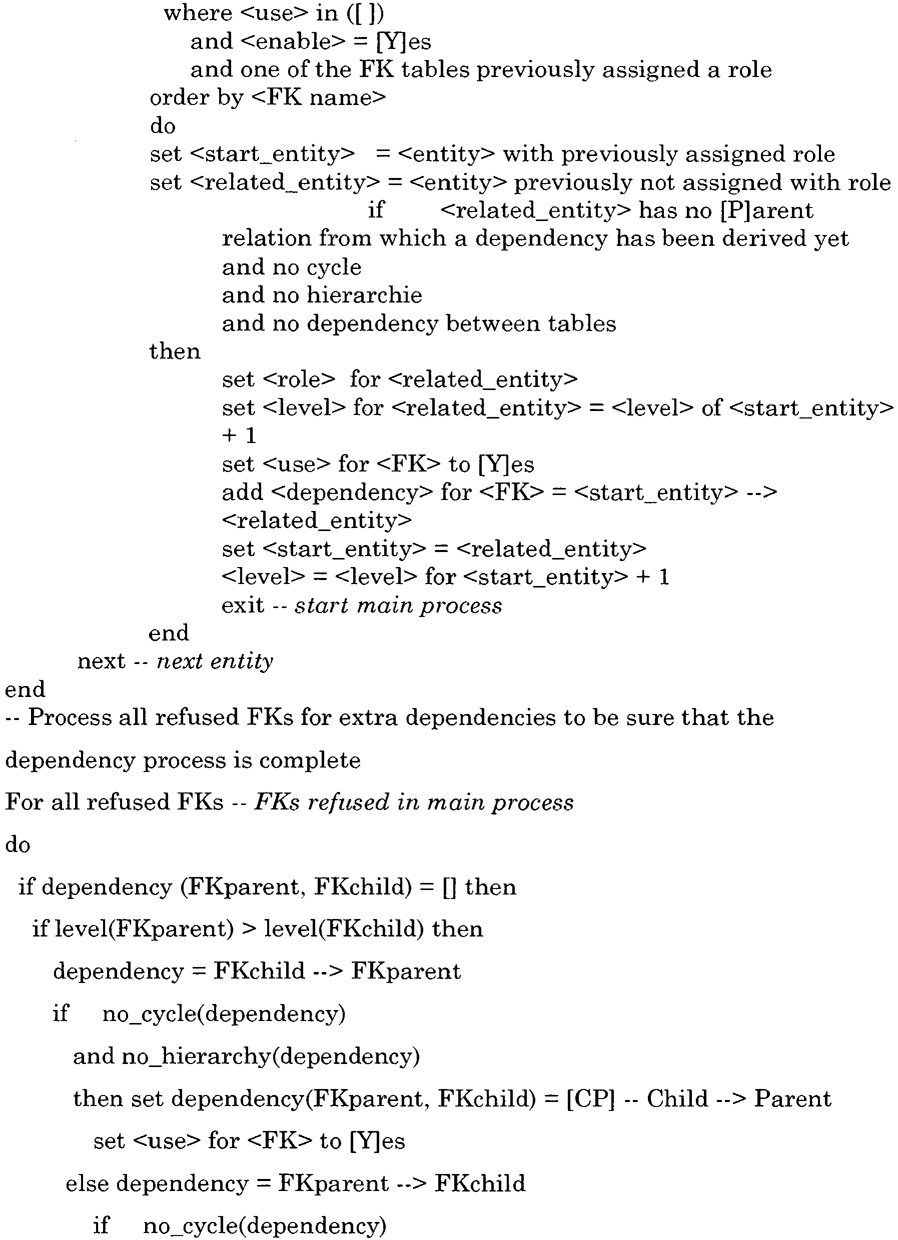

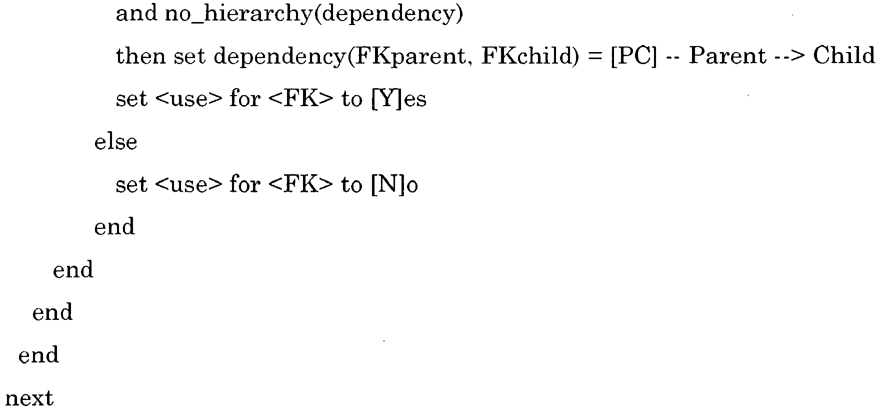

As can be seen from the present example, the determination of levels is intertwined with the selection of foreign key relationships involving the tables of each level.

### EXAMPLE 2

With reference to Figs. 5 and 6 an example of a determination of the order of filling tables of the sub-set of data during the replication procedure (stage 8 in Fig. 1) will be discussed.

During stage 7, it has been read that table A has been selected by the user as the driving table. First all foreign key relationships (FK) in which table A is involved are examined. The first FK that is examined is FK 17. In FK 17, table A is the child and table B is the parent. Since table A is the driving table, the reason for skipping the FK 17 does not apply. Furthermore, the role of the related table B in the FK is the parent role so FK 17 is selected as a dependency for use in the database replication as is indicated by the dashed arrow parallel to FK 17. The child (c) and parent (p) roles of tables A and B in an FK 17 from which a dependency for the replication procedure has been derived are fixedly assigned to the tables A and B.

Next FK 18 is examined. FK 18 is also not to be skipped because table A is the driving table. The role of the related table C in FK 18 is the child role and the related table C has no other (determined) parent, so a dependency based on FK 18 is also established for use in the database replication and the child (c) role of table C in an FK from which a dependency has been derived is fixedly assigned to the table C.

Examination of FK 19 results in refusal of the FK, because the role of the related table C in FK 18 is the child role, but the related table C already has a parent in the form of table A. Thus, no dependency based on FK19 is established for use in the database replication. A dependency based on FK 20 is selected for the same reasons as FK 18.

In response to selections of dependencies based on FKs with the driving table A, which is a level 0 table, the tables B, C and D have been grouped in level 1. The system then turns to examination of the FKs of the level 1 tables B, C and D.

FK 21 between table B and table J is first examined. In FK 21, table B of which FK 21 is examined is not the driving table and table B is a parent in another FK 17. However, the role of the related table J in the examined FK J is not the child role, so there is no reason to skip FK 21. The role of the related table J in FK 21 is the parent role, so a dependency based on FK 21 is also established. Dependencies based on FK 22 and FK 23 are established for the same reasons.

In FK 24 table B of which the foreign key relationships are examined is not the driving table, this table B is already a parent in FK 17 from which a dependency has already been derived and the role of the related table L in the examined FK 24 is the child role, so FK 24 is skipped. FK 25 and FK 26 are skipped for the same reason.

In FK 27 between tables C and O, table C of which the foreign key relationships are examined is not the driving table, but this table is not a parent in another foreign key relationship on which a dependency has been based yet, so FK 27 is not skipped. The role of the related table O in FK 27 is the parent role, so a dependency based on FK 27 is selected for use in the database replication.

Next, FK 28 between tables C and E is examined. Again, table C is not the driving table, but this table is not yet a parent in another foreign key relationship on which a dependency has been based, so the criteria for skipping the examined foreign key relationship do not apply. The role of the related table E in FK 28 is the child role but table E has no other parent in an FK on which a dependency has been based yet, so a dependency based on FK 28 is established for use in the database replication.

FK 29 between tables C and J is skipped, because the related table J is already a parent in an FK (FK 22) forming a basis for a dependency for use in the replication process. A role change for a related table of which an FK is already a basis for a dependency is not allowed.

A dependency based on FK 30 is established for the same reasons as the dependency based on FK 28.

In FK 31, the reasons for skipping do not apply. The role of the related table E is the child role but the related table E already has parent C in an FK constituting a basis for an established dependency, so FK 31 is not selected as a basis for a dependency to be used in the database replication. In FK 32, the role of the related table L is also the child role but the related table L does not already have a parent in an FK on which a dependency is based, so a dependency based on FK 32 is established for use in the database replication.

Now all FKs of preliminary level 1 (tables B, C and D) have been examined, so the system turns to examination of the FKs of the tables E, J, K, L, O, Q and R of preliminary level 2, the final levels being assigned in response to selection of an FK with the respective tables as based for dependencies for use in the replication process. It is to be noted that the tables M and N are not preliminary level 2 tables, because FK 25/26 have not been selected for use in the data replication process yet.

FK 33 constitutes a hierarchy within a table, so FK 33 is not selected to define a dependency for use in the database replication.

FK 34, 35 are not selected as a basis for a dependency, because a role change of the related tables J and K from a role in an FK already forming a basis for a dependency would be required.

In FK 36 table M is not a parent in another foreign key relationship, so FK 36 does not have to be skipped. The role of the related table E in FK 36 is the parent role, so a dependency based on FK 36 is established for use in the database replication.

In FK 37 the table K of which the foreign key relationships are examined is not the driving table, table K is a parent in FK 22, but the role of the related table P in the examined FK 37 is not the child role, so FK 37 is not skipped. The role of the related table P in FK 37 is the parent role so a dependency based on FK 37 is established for use in the database replication.

Now FK 24 is examined in the other direction L → B, and in this case the FK is allowed for use to define the dependency direction L → B in the database replication.

FK 38 for the dependency direction R → Q is skipped because related table Q is classified as a parent in another FK on which a dependency is based, and in FK 38, table Q is a child. The next table to examine is Q with the same FK 38 but in the other direction Q → R. This direction is also not allowed because related table R is already classified as a child in another FK on which a dependency is based, and in FK 38 under examination it is a parent.

Now all level 2 tables are examined and the next level tables M and P are examined.

FK 25 is examined for the dependency direction M → B, and for the same reason as FK 24 (direction L → B) this FK is selected for use to define a dependency L → B for use in the database replication. The effect of adding this dependency is that the level for table B is changed to level 4 (the largest number of sequential dependencies linking table B to the driving table being four), and the levels of all dependent tables (tables Q, K, P, J) have to be raised as well.

Now there are no tables left, that are linked to a table processed in the previous round. A new start table is chosen for examination of the remaining FKs, in this case table N with FK 26 in the dependency direction B → N. This dependency is allowed and this FK is selected for use to define the dependency direction B → N in the database replication.

Now the normal procedure is ended. When there are still FKs left, and there is no dependency between the two tables of those FKs, the remaining FKs may be re-examined to check whether a dependency is still possible, even with some risk of compromising referential integrity. Such risks are, however, shifted to the end of the replication procedure, so chain-effects of integrity errors remain absent or limited. Some examples of rules and considerations for including the remaining FKs or not are set forth below.

In this procedure the reason to not allow the dependency is a dependency-cycle (for instance X-->Y--> Z--> A) or hierarchy. Again the not used FKs will be examined. The order of re-examining the FKs is starting with the lowest level table not yet examined.

FK 19 is not used because there is already a dependency between C and A.

For FK 29 there is no dependency between J and C so this FK is examined further. First the C → J direction is checked because C is a level 1 table and table J a level 5 and the preferred direction is from the lowest level table to the higher level table. The dependency C → J is not creating a cycle and also no hierarchy is created, so this dependency is included.

For FK 31 there is no dependency between E and D so this FK is examined further. The same rule as FK 29 is applied and a dependency D → E is included.

FK 33 is a hierarchy (E → E) and is therefore not included.

For FK 34 there is no dependency between J and E so this FK is examined further. The same rule as FK 29 is applied and dependency E → J is included.

For FK 35 there is no dependency between K and E so this FK is examined further. The same rule as FK29 is applied and dependency E → K is included. For FK 38 there is no dependency between Q and R so this is a candidate. The same rule as FK 29 is applied and dependency R → Q is included.

The process described results in a dependency path chart shown in Fig. 6 representing the order in which tables will be filled with records during replication in accordance with the foreign key constraints applicable between data in selected records in the driving table or the start table and data in the records of the dependent table.

The reasons for acceptance of dependencies and for level numberings are summarized in the tables set fort below:

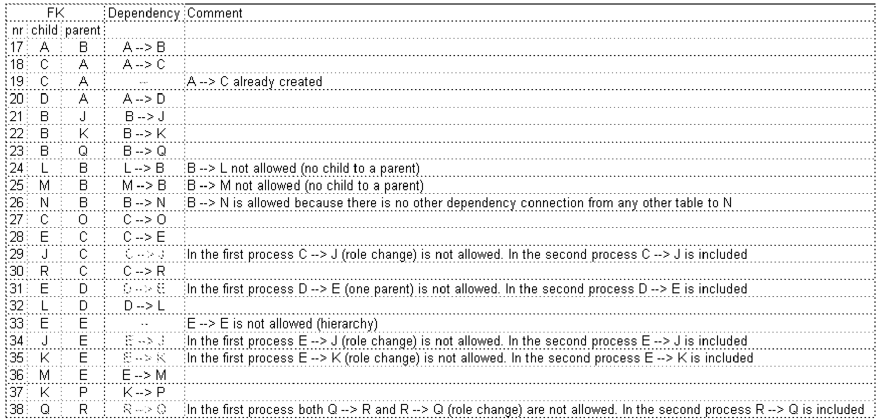

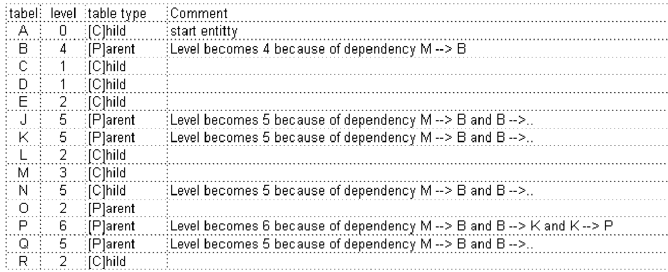

It will be readily apparent to the skilled person that within the framework of the present invention as defined in the claims, many other variants are conceivable. It is for instance possible to select more than one driving table or to require one or more tables to be included in full. If more than one driving table is selected, the search for usable foreign keys and records associated thereby is carried out separately for each driving table, the end result being an aggregation of the data of the subset databases wherein records that have been selected for replication more than once are removed. Alternatively, records that appear more than once may be eliminated.

To influence how dependencies are established, it is also possible to provide for the possibility of pre-defining dependencies to enforce that a dependency between tables can only be included in a predefined direction. Examination of foreign key relationships will then also include checking whether the dependency resulting therefrom would not conflict with a predefined dependency.

## Claims

1. A method for automatically creating a partial replica database (2) from a source relational database (1) of which each table (A-E, J-R) includes rows (3) constituting records in the form of rows of data, each row of data being associated to an instance of an entity and columns (4) containing values of an attribute for each of the instances of the entities, comprising:
determining tables (A-E, J-R) of the database (1), foreign key relationships between the tables and parent or child roles of the tables involved in each foreign key relationship;
reading an inputted command indicating a selection of a table (A) as a driving table from which records are selected in accordance with an inputted or selected rule;
selecting records of the driving table (A) in accordance with filter rules;
selecting instances of other tables (B-E, J-R), associated with the driving table (A) in accordance with the at least one foreign key relationship; and
replicating the selected instances from the tables of the source database (1) to corresponding tables of the partial replica database (2);
**characterized by**
selecting a group of the tables (B, C, D) that are in direct foreign key relationship with the driving table (A) and assigning a first preliminary level to each of the tables (B, C, D) of the selected group;
establishing dependencies between the driving table (A) and the selected tables (B, C, D) in accordance with foreign key relationships (17, 18, 19, 20) between the driving table (A) and the selected tables (B, C, D);
once or repeatedly:
- selecting a next group of the remaining tables (E, J, K, L, O, Q, R) for which a direct dependency has been established from the group of directly previously selected tables (B, C, D) as start tables and assigning a next level to each of the start tables (E, J, K, L, O, Q, R);
- examining foreign key relationships (21-32) of the start tables (E, J, K, L, O, Q, R) for conflicts with previously established dependencies; and
- establishing dependencies between the start table (E, J, K, L, O, Q, R) and the tables (B, C, D) directly related thereto in accordance with the ones of the foreign key relationships (21, 22, 23, 27, 28, 30, 32) between the start table (E, J, K, L, O, Q, R) and the related tables (B, C. D) for which no conflict with previously established dependencies has been found;
assigning dependency levels to the tables (A-E, J-R), for each table in accordance with maximum numbers of dependencies to the driving table (A);
and
carrying out the selection of instances of the other tables (B-E, J-R) and the replication of the selected instances successively for each next dependency level, wherein for each table of the dependency level, the instances of the table, associated with the selected records in at least one table of a previous dependency level are selected in accordance with the at least one foreign key relationship on which the at least one established dependency of said table is based.

2. A method according to claim 1, wherein the examination of foreign key relationships includes giving priority to foreign key relationships in which the start table has a child role over foreign key relationships in which the start table has a parent role.

3. A method according to claim 2, wherein the examination of foreign key relationships for conflicts with previously established dependencies includes:
if the start table is not the driving table (A), the start table is a parent in another foreign key relationship and the role of the related table in the foreign key relationship is the child role, skipping the foreign key relationship.

4. A method according to any one of the preceding claims, wherein the examination of foreign key relationships for conflicts with previously established dependencies includes:
if (a) the role of the related table in the foreign key relationship is the parent role or if (b) the role of the related table in the foreign key relationship is the child role and the related table has no other parent, accepting the foreign key relationship as a basis for establishing a dependency for use in the database replication.

5. A method according to any one of the preceding claims, wherein in response to selection of a foreign key relationship for use in the database replication, roles of tables involved in each selected foreign key relationship are fixed.

6. A method according to claim 5, further comprising, subsequently, for all non-selected foreign key relationships, if the parent table has a parent role in a selected foreign key relationship and if the child table has no fixed role in a selected foreign key relationship, selecting the non-selected foreign key relationship for use in the database replication.

7. A method according to any one of the preceding claims, further comprising the data read for replication prior to storage in the sub-set database.

8. A computer program product for automatically creating a partial replica database (2) from a source relational database (1) of which each table (A-E, J-R) includes rows (3) constituting records in the form of rows of data, each row of data being associated to an instance of an entity and columns (4) containing values of an attribute for each of the instances of the entities, the computer program product comprising computer readable instructions for:
determining tables (A-E, J-R) of the database (1), foreign key relationships between the tables and parent or child roles of the tables involved in each foreign key relationship;
reading an inputted command indicating a selection of a table (A) as a driving table from which records are selected in accordance with an inputted or selected rule;
selecting records of the driving table (A) in accordance with filter rules;
selecting instances of other tables (B-E, J-R), associated with the driving table (A) in accordance with the at least one foreign key relationship; and replicating the selected instances from the tables of the source database (1) to corresponding tables of the partial replica database (2);
**characterized by**
selecting a group of the tables (B, C, D) that are in direct foreign key relationship with the driving table (A) and assigning a first preliminary level to each of the tables (B, C, D) of the selected group;
establishing dependencies between the driving table (A) and the selected tables in accordance with foreign key relationships (17, 18, 19, 20) between the driving table and the selected tables (B, C, D);
once or repeatedly:
- selecting a next group of the remaining tables(E, J, K, L, O, Q, R) for which a direct dependency has been established from the group of directly previously selected tables (B, C, D) as start tables and assigning a next level to each of the start tables (E, J, K, L, O, Q, R);
- examining foreign key relationships (21-32) of the start tables (E, J, K, L, O, Q, R) for conflicts with previously established dependencies; and
- establishing dependencies between the start table (E, J, K, L, O, Q, R) and the tables (B, C, D) directly related thereto in accordance with the ones of the foreign key relationships (21, 22, 23, 27, 28, 30, 32) between the start table and the related tables (B, C, D) for which no conflict with previously established dependencies has been found;
assigning dependency levels to the tables (A-E, J-R), for each table in accordance with maximum numbers of dependencies to the driving table (A); and
carrying out the selection of instances of the other tables (B-E, J-R) and the replication of the selected instances successively for each next dependency level, wherein for each table of the dependency level, the instances of the table, associated with the selected records in at least one table of a previous dependency level are selected in accordance with the at least one foreign key relationship on which the at least one established dependency of said table is based.

9. A computer readable data storage medium carrying a computer program product according to claim 8 in computer readable form.

## Patentansprüche

1. Verfahren zum automatischen Erzeugen einer partiellen Replika-Datenbank (2) aus einer relationalen Quelldatenbank (1), in der jede Tabelle (A-E, J-R) Zeilen (3), die Datensätze darstellen in Form von Datenzeilen, die einer Instanz einer Entität zugeordnet sind, und Spalten (4), die Werte eines Attributs für jede der Instanzen der Entitäten enthalten, beinhaltet, das Verfahren umfassend:
das Bestimmen von Tabellen (A-E, J-R) der Datenbank (1), Fremdschlüsselbeziehungen zwischen den Tabellen und Eltern- oder Kindrollen der Tabellen, die in jede Fremdschlüsselbeziehung involviert sind;
das Lesen eines eingegebenen Befehls, der eine Auswahl einer Tabelle (A) als treibende Tabelle angibt, aus der Datensätze in Übereinstimmung mit einer eingegebenen oder ausgewählten Regel ausgewählt werden;
das Auswählen von Datensätzen der treibenden Tabelle (A) in Übereinstimmung mit Filterregeln;
das Auswählen von Instanzen anderer Tabellen (B-E, J-R), assoziiert mit der treibenden Tabelle (A) in Übereinstimmung mit der mindestens einen Fremdschlüsselbeziehung; und
das Replizieren der ausgewählten Instanzen aus den Tabellen der Quelldatenbank (1) zu entsprechenden Tabellen der partiellen Replika-Datenbank (2);
**gekennzeichnet durch**
das Auswählen einer Gruppe der Tabellen (B, C, D) die in direkter Fremdschlüsselbeziehung mit der treibenden Tabelle (A) sind, und Zuordnen einer ersten vorbereitenden Stufe zu jeder der Tabellen (B, C, D) der ausgewählten Gruppe;
das Erstellen von Abhängigkeiten zwischen der treibenden Tabelle (A) und den ausgewählten Tabellen (B, C, D) in Übereinstimmung mit Fremdschlüsselbeziehungen (17, 18, 19, 20) zwischen der treibenden Tabelle (A) und den ausgewählten Tabellen (B, C, D);
einmal oder wiederholt:
- das Auswählen einer nächsten Gruppe der verbleibenden Tabellen (E, J, K, L, O, Q, R), für die eine direkte Abhängigkeit aus der Gruppe direkt zuvor ausgewählter Tabellen (B, C, D) erstellt wurde, als Starttabellen und Zuordnung einer nächsten Stufe zu jeder der Starttabellen (E, J, K, L, O, Q, R);
- das Prüfen von Fremdschlüsselbeziehungen (21-32) der Starttabellen (E, J, K, L, O, Q, R) auf Konflikte mit zuvor erstellten Abhängigkeiten; und
- das Erstellen von Abhängigkeiten zwischen der Starttabelle (E, J, K, L, O, Q, R) und den Tabellen (B, C, D), die in direkter Beziehung dazu sind, in Übereinstimmung mit denen der Fremdschlüsselbeziehungen (21, 22, 23, 27, 28, 30, 32) zwischen der Starttabelle (E, J, K, L, O, Q, R) und den verwandten Tabellen (B, C, D), für die kein Konflikt mit zuvor erstellten Abhängigkeiten gefunden wurde;
das Zuordnen von Abhängigkeitsstufen zu den Tabellen (A-E, J-R) für jede Tabelle in Übereinstimmung mit Höchstanzahlen von Abhängigkeiten zu der treibenden Tabelle (A);
und
das Ausführen der Auswahl von Instanzen der anderen Tabellen (B-E, J-R) und die Replikation der ausgewählten Instanzen nacheinander für jede nächste Abhängigkeitsstufe, wobei für jede Tabelle der Abhängigkeitsstufe die Instanzen der Tabelle, assoziiert mit den ausgewählten Datensätzen in mindestens einer Tabelle einer vorherigen Abhängigkeitsstufe in Übereinstimmung mit der mindestens einen Fremdschlüsselbeziehung, auf der die mindestens eine erstellte Abhängigkeit der Tabelle beruht, ausgewählt werden.

2. Verfahren nach Anspruch 1, wobei die Prüfung von Fremdschlüsselbeziehungen umfasst, dass Fremdschlüsselbeziehungen, in denen die Starttabelle eine Kindrolle hat, gegenüber Fremdschlüsselbeziehungen, in denen die Starttabelle eine Elternrolle hat, Priorität erhalten.

3. Verfahren nach Anspruch 2, wobei die Prüfung von Fremdschlüsselbeziehungen auf Konflikte mit zuvor erstellten Abhängigkeiten umfasst, dass:
wenn die Starttabelle nicht die treibende Tabelle (A) ist, die Starttabelle eine Elternrolle in einer anderen Fremdschlüsselbeziehung hat und die Rolle der verwandten Tabelle in der Fremdschlüsselbeziehung die Kindrolle ist, mit Überspringen der Fremdschlüsselbeziehung.

4. Verfahren nach einem der vorhergehenden Ansprüche, wobei die Prüfung von Fremdschlüsselbeziehungen auf Konflikte mit zuvor erstellten Abhängigkeiten umfasst, dass:
wenn (a) die Rolle der verwandten Tabelle in der Fremdschlüsselbeziehung die Elternrolle ist oder wenn (b) die Rolle der verwandten Tabelle in der Fremdschlüsselbeziehung die Kindrolle ist und die verwandte Tabelle kein anderes Elternteil hat, das Akzeptieren der Fremdschlüsselbeziehung als eine Basis für die Erstellung einer Abhängigkeit zur Verwendung in der Datenbank-Replikation.

5. Verfahren nach einem der vorhergehenden Ansprüche, wobei, als Reaktion auf die Auswahl einer Fremdschlüsselbeziehung zur Verwendung in der Datenbank-Replikation, Rollen von Tabellen, die in jede ausgewählte Fremdschlüsselbeziehung involviert sind, fest sind.

6. Verfahren nach Anspruch 5, ferner umfassend, dass, im Anschluss für alle nicht ausgewählten Fremdschlüsselbeziehungen, wenn die Elterntabelle eine Elternrolle in einer ausgewählten Fremdschlüsselbeziehung hat, und wenn die Kindtabelle keine feste Rolle in einer ausgewählten Fremdschlüsselbeziehung hat, die nicht ausgewählte Fremdschlüsselbeziehung zur Verwendung in der Datenbank-Replikaton ausgewählt wird.

7. Verfahren nach einem der vorhergehenden Ansprüche, ferner umfassend die Daten, gelesen für Replikation vor dem Speichern in der Untergruppendatenbank.

8. Computerprogrammprodukt zum automatischen Erstellen einer partiellen Replika-Datenbank (2) aus einer relationalen Quelldatenbank (1), in der jede Tabelle (A-E, J-R) Zeilen (3), die Datensätze darstellen in Form von Datenzeilen, die einer Instanz einer Entität zugeordnet sind, und Spalten (4), die Werte eines Attributs für jede der Instanzen der Entitäten enthalten, umfasst, welches Computerprogrammprodukt lesbare Befehle umfasst für:
das Bestimmen von Tabellen (A-E, J-R) der Datenbank (1), Fremdschlüsselbeziehungen zwischen den Tabellen und Eltern- oder Kindrollen der Tabellen, die in jede Fremdschlüsselbeziehung involviert sind;
das Lesen eines eingegebenen Befehls, der eine Auswahl einer Tabelle (A) als eine treibende Tabelle angibt, aus der Datensätze in Übereinstimmung mit einer eingegebenen oder ausgewählten Regel ausgewählt werden;
das Auswählen von Datensätzen der treibenden Tabelle (A) in Übereinstimmung mit Filterregeln;
das Auswählen von Instanzen anderer Tabellen (B-E, J-R), assoziiert mit der treibenden Tabelle (A) in Übereinstimmung mit der mindestens einen Fremdschlüsselbeziehung; und
das Replizieren der ausgewählten Instanzen aus den Tabellen der Quelldatenbank (1) entsprechend Tabellen der partiellen Replika-Datenbank (2);
**gekennzeichnet durch**
das Auswählen einer Gruppe der Tabellen (B, C, D) die in direkter Fremdschlüsselbeziehung mit der treibenden Tabelle (A) sind, und Zuordnen einer ersten vorbereitenden Stufe zu jeder der Tabellen (B, C, D) der ausgewählten Gruppe;
das Erstellen von Abhängigkeiten zwischen der treibenden Tabelle (A) und den ausgewählten Tabellen in Übereinstimmung mit Fremdschlüsselbeziehungen (17, 18, 19, 20) zwischen der treibenden Tabelle und den ausgewählten Tabellen (B, C, D);
einmal oder wiederholt:
- das Auswählen einer nächsten Gruppe der verbleibenden Tabellen (E, J, K, L, O, Q, R), für die eine direkte Abhängigkeit aus der Gruppe direkt zuvor ausgewählter Tabellen (B, C, D) erstellt wurde, als Starttabellen und Zuordnung einer nächsten Stufe zu jeder der Starttabellen (E, J, K, L, O, Q, R);
- das Prüfen von Fremdschlüsselbeziehungen (21-32) der Starttabellen (E, J, K, L, O, Q, R) auf Konflikte mit zuvor erstellten Abhängigkeiten; und
- das Erstellen von Abhängigkeiten zwischen der Starttabelle (E, J, K, L, O, Q, R) und den Tabellen (B, C, D), die in direkter Beziehung dazu sind, in Übereinstimmung mit denen der Fremdschlüsselbeziehungen (21, 22, 23, 27, 28, 30, 32) zwischen der Starttabelle und den verwandten Tabellen (B, C, D), für die kein Konflikt mit zuvor erstellten Abhängigkeiten gefunden wurde;
das Zuordnen von Abhängigkeitsstufen zu den Tabellen (A-E, J-R) für jede Tabelle in Übereinstimmung mit Höchstanzahlen von Abhängigkeiten zu der treibenden Tabelle (A); und
das Ausführen der Auswahl von Instanzen der anderen Tabellen (B-E, J-R) und die Replikation der ausgewählten Instanzen nacheinander für jede nächste Abhängigkeitsstufe, wobei für jede Tabelle der Abhängigkeitsstufe die Instanzen der Tabelle, assoziiert mit den ausgewählten Datensätzen in mindestens einer Tabelle einer vorherigen Abhängigkeitsstufe in Übereinstimmung mit der mindestens einen Fremdschlüsselbeziehung, auf der die mindestens eine erstellte Abhängigkeit der Tabelle beruht, ausgewählt werden.

9. Computerlesbares Datenspeichermedium, das ein Computerprogrammprodukt nach Anspruch 8 in computerlesbarer Form trägt.

## Revendications

1. Procédé pour créer automatiquement une copie partielle de base de données (2) à partir d'une base de données relationnelle source (1) dont chaque table (A-E, J-R) comprend des rangées (3) constituant des enregistrements sous la forme de rangées de données, chaque rangée de données étant associée à une instance d'une entité, et des colonnes (4) contenant des valeurs d'un attribut pour chacune des instances des entités, comprenant :
la détermination de tables (A-E, J-R) de la base de données (1), de relations de clé étrangère entre les tables, et de rôles de parent ou d'enfant des tables impliquées dans chaque relation de clé étrangère ;
la lecture d'une commande saisie indiquant une sélection d'une table (A) comme table dominante dans laquelle des enregistrements sont sélectionnés conformément à une règle saisie ou sélectionnée ;
la sélection d'enregistrements de la table dominante (A) conformément à des règles de filtrage ;
la sélection d'instances d'autres tables (B-E, J-R), associées à la table dominante (A) conformément à l'au moins une relation de clé étrangère ; et
la duplication des instances sélectionnées, des tables de la base de données source (1) à des tables correspondantes de la copie partielle de base de données (2) ;
**caractérisé par**
la sélection d'un groupe des tables (B, C, D) qui sont dans une relation de clé étrangère directe avec la table dominante (A), et l'attribution d'un premier niveau préliminaire à chacune des tables (B, C, D) du groupe sélectionné ;
l'établissement de dépendances entre la table dominante (A) et les tables sélectionnées (B, C, D) conformément à des relations de clé étrangère (17, 18, 19, 20) entre la table dominante (A) et les tables sélectionnées (B, C, D) ;
une seule fois ou de façon répétée :
- la sélection d'un groupe suivant des tables restantes (E, J, K, L, O, Q, R) pour lesquelles une dépendance directe a été établie à partir du groupe de tables précédemment sélectionnées directement (B, C, D) comme tables de départ, et l'attribution d'un niveau suivant à chacune des tables de départ (E, J, K, L, O, Q, R) ;
- l'examen de relations de clé étrangère (21-32) des tables de départ (E, J, K, L, O, Q, R) pour détecter des conflits avec des dépendances précédemment établies ; et
- l'établissement de dépendances entre la table de départ (E, J, K, L, O, Q, R) et les tables (B, C, D) directement liées à elle conformément à celles des relations de clé étrangère (21, 22, 23, 27, 28, 30, 32) entre la table de départ (E, J, K, L, O, Q, R) et les tables liées (B, C, D) pour lesquelles aucun conflit avec des dépendances précédemment établies n'a été trouvé ;
l'attribution de niveaux de dépendance aux tables (A-E, J-R), pour chaque table en fonction de nombres maximum de dépendances à la table dominante (A) ; et
la réalisation de la sélection d'instances des autres tables (B-E, J-R) et de la duplication des instances sélectionnées successivement pour chaque niveau de dépendance suivant, où pour chaque table du niveau de dépendance, les instances de la table, associées aux enregistrements sélectionnés dans au moins une table d'un niveau de dépendance précédent, sont sélectionnées conformément à l'au moins une relation de clé étrangère sur laquelle l'au moins une dépendance établie de ladite table est basée.

2. Procédé selon la revendication 1, dans lequel l'examen de relations de clé étrangère comprend le fait de donner priorité à des relations de clé étrangère dans lesquelles la table de départ a un rôle d'enfant par rapport à des relations de clé étrangère dans lesquelles la table de départ a un rôle de parent.

3. Procédé selon la revendication 2, dans lequel l'examen de relations de clé étrangère pour détecter des conflits avec des dépendances précédemment établies comprend :
si la table de départ n'est pas la table dominante (A), la table de départ est un parent dans une autre relation de clé étrangère et le rôle de la table liée dans la relation de clé étrangère est le rôle d'enfant, l'omission de la relation de clé étrangère.

4. Procédé selon l'une quelconque des revendications précédentes, dans lequel l'examen de relations de clé étrangère pour détecter des conflits avec des dépendances précédemment établies comprend :
si (a) le rôle de la table liée dans la relation de clé étrangère est le rôle de parent ou si (b) le rôle de la table liée dans la relation de clé étrangère est le rôle d'enfant et la table liée n'a pas d'autre parent, l'acceptation de la relation de clé étrangère comme base pour établir une dépendance destinée à être utilisée dans la duplication de base de données.

5. Procédé selon l'une quelconque des relations précédentes, dans lequel, en réponse à la sélection d'une relation de clé étrangère destinée à être utilisée dans la duplication de base de données, des rôles de tables impliquées dans chaque relation de clé étrangère sélectionnée sont fixés.

6. Procédé selon la revendication 5, comprenant en outre, subséquemment, pour toutes les relations de clé étrangère non sélectionnées, si la table parent a un rôle de parent dans une relation de clé étrangère sélectionnée et si la table enfant n'a pas de rôle fixé dans une relation de clé étrangère sélectionnée, la sélection de la relation de clé étrangère non sélectionnée pour l'utiliser dans la duplication de base de données.

7. Procédé selon l'une quelconque des revendications précédentes, comprenant en outre la lecture de données pour duplication avant stockage dans la base de données de sous-ensemble.

8. Produit programme d'ordinateur pour créer automatiquement une copie partielle de base de données (2) à partir d'une base de données relationnelle source (1) dont chaque table (A-E, J-R) comprend des rangées (3) constituant des enregistrements sous la forme de rangées de données, chaque rangée de données étant associée à une instance d'une entité, et des colonnes (4) contenant des valeurs d'un attribut pour chacune des instances des entités, le produit programme d'ordinateur comprenant des instructions lisibles par ordinateur pour :
déterminer des tables (A-E, J-R) de la base de données (1), des relations de clé étrangère entre les tables, et des rôles de parent ou d'enfant des tables impliquées dans chaque relation de clé étrangère ;
lire une commande saisie indiquant une sélection d'une table (A) comme table dominante dans laquelle des enregistrements sont sélectionnés conformément à une règle saisie ou sélectionnée ;
sélectionner des enregistrements de la table dominante (A) conformément à des règles de filtrage ;
sélectionner des instances d'autres tables (B-E, J-R), associées à la table dominante (A) conformément à l'au moins une relation de clé étrangère ; et
dupliquer les instances sélectionnées, des tables de la base de données source (1) à des tables correspondantes de la copie partielle de base de données (2) ;
**caractérisé par**
la sélection d'un groupe des tables (B, C, D) qui sont dans une relation de clé étrangère directe avec la table dominante (A), et l'attribution d'un premier niveau préliminaire à chacune des tables (B, C, D) du groupe sélectionné ;
l'établissement de dépendances entre la table dominante (A) et les tables sélectionnées (B, C, D) conformément à des relations de clé étrangère (17, 18, 19, 20) entre la table dominante (A) et les tables sélectionnées (B, C, D) ;
une seule fois ou de façon répétée :
- la sélection d'un groupe suivant des tables restantes (E, J, K, L, O, Q, R) pour lesquelles une dépendance directe a été établie à partir du groupe de tables précédemment sélectionnées directement (B, C, D) comme tables de départ, et l'attribution d'un niveau suivant à chacune des tables de départ (E, J, K, L, O, Q, R) ;
- l'examen de relations de clé étrangère (21-32) des tables de départ (E, J, K, L, O, Q, R) pour détecter des conflits avec des dépendances précédemment établies ; et
- l'établissement de dépendances entre la table de départ (E, J, K, L, O, Q, R) et les tables (B, C, D) directement liées à elle conformément à celles des relations de clé étrangère (21, 22, 23, 27, 28, 30, 32) entre la table de départ (E, J, K, L, O, Q, R) et les tables liées (B, C, D) pour lesquelles aucun conflit avec des dépendances précédemment établies n'a été trouvé ;
l'attribution de niveaux de dépendance aux tables (A-E, J-R), pour chaque table en fonction de nombres maximum de dépendances à la table dominante (A) ; et
la réalisation de la sélection d'instances des autres tables (B-E, J-R) et de la duplication des instances sélectionnées successivement pour chaque niveau de dépendance suivant, où pour chaque table du niveau de dépendance, les instances de la table, associées aux enregistrements sélectionnés dans au moins une table d'un niveau de dépendance précédent, sont sélectionnées conformément à l'au moins une relation de clé étrangère sur laquelle l'au moins une dépendance établie de ladite table est basée.

9. Support de stockage de données lisible par ordinateur portant un produit programme d'ordinateur selon la revendication 8 sous forme lisible par ordinateur.
